# EUROPEAN PATENT APPLICATION

(11) **EP 0 919 990 A2**
(43) Date of publication of application: **02.06.1999**
(21) Application number: 98309480.6
(22) Date of filing: 17.11.1998
(51) Int. Cl.: G11B 5/008, G11B 21/02

(54) **Backwards read/write capability in linear tape by track trimming**

(30) Priority: 24.11.1997 US 976839
(71) Applicant: Hewlett-Packard Company, Palo Alto, California 94304 (US)
(72) Inventor: Ujvarosy, Damon, Almondsbury, Bristol BS12 4BP (GB); Simmons, Ralph F., Boise, Idaho 83713 (US); Fasen, Donald J., Boise, Idaho 83713 (US)
(74) Representative: Colgan, Stephen James

(57) **Abstract**

A read and write head (16) system for removable storage medium (14) is taught for implementing multiple generation backwards write capability. The read and write head (16) system includes a read apparatus (40) and a write apparatus (42). The read and write head (16) system also includes an indexer (20) that is operative to position the read apparatus (40) and the write apparatus (42) during read and write operations. The read and write head (16) system is also configurable to position the write apparatus (42) during writing of a track (56) so as to at least partially overlap an adjacent previously written track (54).

## Description

### FIELD OF THE INVENTION

This invention relates to the storage of computer information within a data storage device and, more particularly, to the control of read/write capabilities in linear tape to provide compatibility between earlier and later generation hardware components.

### BACKGROUND OF THE INVENTION

Magnetic data storage media have been used to store information-bearing signals on magnetic tape, floppy disks, and hard drive disks. Magnetic tape is one such medium that has seen increases in the number of tracks that are written/read to/from a tape. With the introduction of each new generation of magnetic tape, data has been stored on magnetic tape in ever increasing densities.

According to one implementation, data is stored on a linear magnetic tape via serpentine recording when writing data tracks onto the tape. Serpentine scanning is implemented when reading the written data tracks. One common usage for such a magnetic tape system is to provide data backup for a computer hard disk drive. With a linear tape having serpentine recording and scanning of data tracks, the magnetic tape has a logical beginning and end that are located at the same physical end of the magnetic tape. Serpentine writing and scanning of the tape requires accurate control of the lateral positioning of a magnetic head over the tape in order to position the read/write head(s) relative to a desired track. Other track layouts are also known for storing data onto a linear magnetic tape. For purposes of clarifying terminology, a read/write element comprises a single read gap and a single write gap that are alignable to read/write a single track. Furthermore, a read/write head comprises an array of read/write elements.

One problem that has been encountered with the storage and reading of data from a magnetic media occurs when the format for storing data onto a magnetic media is changed. For example, with successive new, or next, generation products, increases in track density and data storage are frequently implemented on future generation products. It has generally been the case that next generation products are made with better components and almost always include increases in linear data density and track density. However, read/write equipment that is designed for such future generation products cannot typically read/write previous generation magnetic media, or tape.

One previous technique for overcoming the above problem has been to incorporate previous generation read/write heads into next generation products in order to provide backwards compatibility with earlier generation products. However, this adds considerable expense and complexity to new, or next, generation products.

The above problem is further compounded when a multiple channel tape system is used. Many multiple channel linear tape products include a plurality of associated read/write heads, one read/write head being dedicated to each channel. Each channel is recorded within a bundle of tracks. For example, a first generation eight-channel tape will require eight read/write head elements. A second generation eight-channel tape will require eight read/write head elements. For compatibility between the first and second generations to occur, the second generation eight-channel tape will need to have 16 read/write head elements: eight for the first generation and eight for the second generation. Hence, for a second generation product to have backwards compatibility with the immediately preceding generation, sixteen read/write head elements will be needed. If the second generation is a 16-channel head, then a total of twenty-four read/write elements will be needed in order to ensure read/write compatibility for both generations. For a third generation product with 16 channels to have backwards compatibility with two immediately preceding generations of product, forty read/write head elements will be needed. Such a requirement will greatly increase the cost and complexity of a tape product wherein the incorporation of arrays of read/write head elements will require an increase in expense in order to include backwards compatibility for older technology components.

This invention relates to the problems associated with providing backwards read/write compatibility on next generation products without having to include old technology read/write heads in the new products.

This invention also relates to an improved tape track layout and read/write head array layout that accomplishes a backwards read/write compatibility with previous generation products.

### SUMMARY OF THE INVENTION

According to one aspect of this invention, a read/write head for use with a linear magnetic tape is taught for implementing multiple generation backwards write capability. The read/write head includes a magnetic reader and a magnetic writer. The read/write head also includes an indexer that is operative to position the writer and the reader during read/write operations. The read/write head is also configurable to implement track trimming by positioning the writer during writing of a track so as to at least partially overlap an adjacent previously written track.

According to another aspect, a method is taught for writing a plurality of data tracks to be read on a magnetic linearly movable storage medium. The method includes the steps of: writing a first track of data on the magnetic storage medium; and writing a second, subsequent track of data on the magnetic storage medium adjacent to the first track and at least partially overlapping the adjacent track so as to trim the first track.

### DESCRIPTION OF THE DRAWINGS

Preferred embodiments of the invention are described below with reference to the following accompanying drawings depicting examples embodying the best mode for practicing the invention.
Fig. 1 is a simplified block and schematic diagram showing one exemplary system for accomplishing a backwards write compatibility with previous generation products in accordance with one aspect of the invention;
Fig. 2 is an enlarged plan view of a previous generation read/write element that has been characterized as a Generation 1 head for purposes of discussion;
Fig. 3 is an enlarged plan view of a next generation read/write element that has been characterized as a Generation 2 head for purposes of discussion;
Fig. 4 is a schematic representation of track spacing on a linear tape for the Generation 1 read/write element of Fig. 2; and
Fig. 5 is a schematic representation of track spacing on a linear tape for the Generation 2 read/write element of Fig. 3.

### DETAILED DESCRIPTION OF THE INVENTION

This disclosure of the invention is submitted in furtherance of the constitutional purposes of the U.S. Patent Laws "to promote the progress of science and useful arts". U.S. Constitution, Article 1, Section 8.

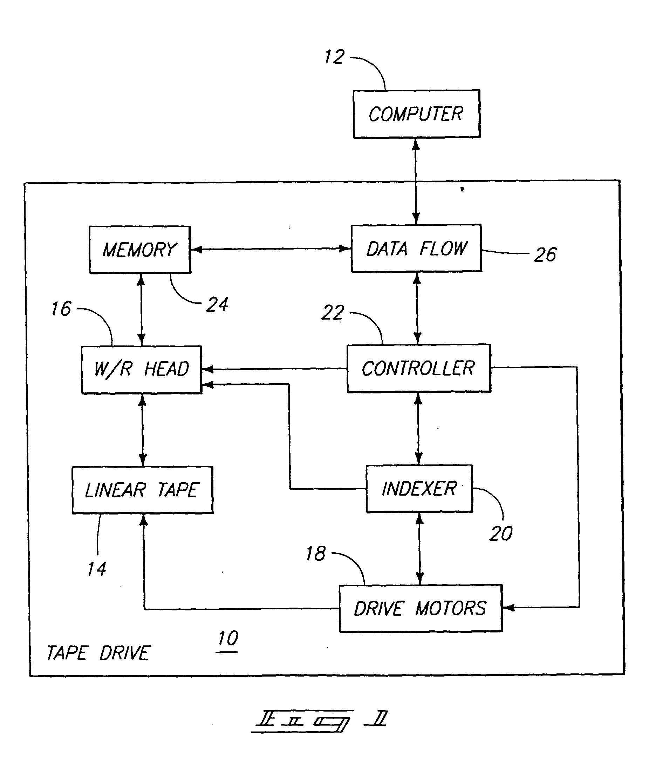

Figure 1 shows a tape drive 10 according to one aspect of this invention. Tape drive 10 is shown operatively connected with a computer 12 such that data is transferred between a storage medium in the form of a linear magnetic tape 14 and computer 12 via data flow 26. It is to be understood that computer 12 can be a computer of any type, a peripheral controller, a communications system, or a local or wide area network and the like. It is also understood that linear tape 14 can be any of a number of magnetic data storage media including floppy diskettes, hard disk drives, and magnetic tape drives. It is further understood that the storage medium can take on the form of magnetic, optical, electric field modification, heat-generated systems, direct electron injection writing, or any other form of data storage.

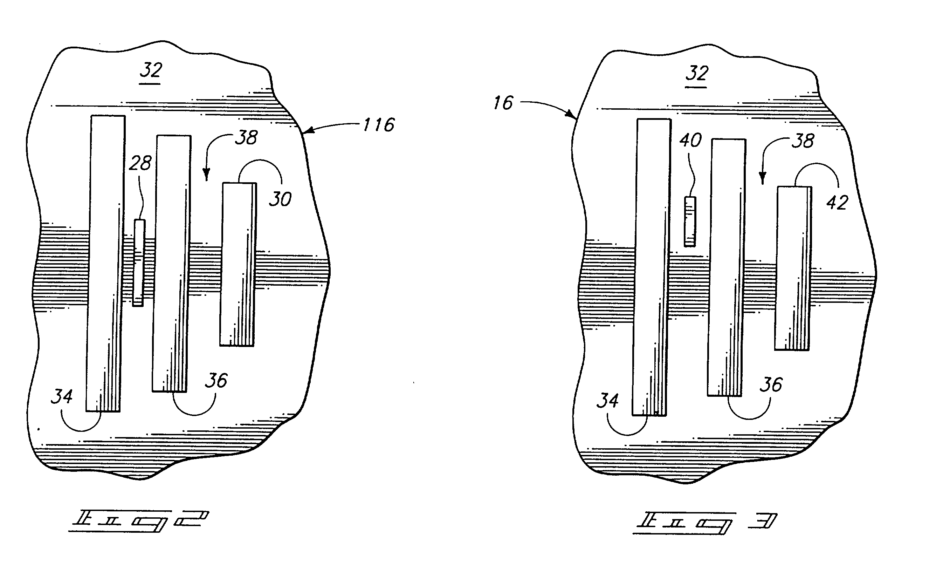

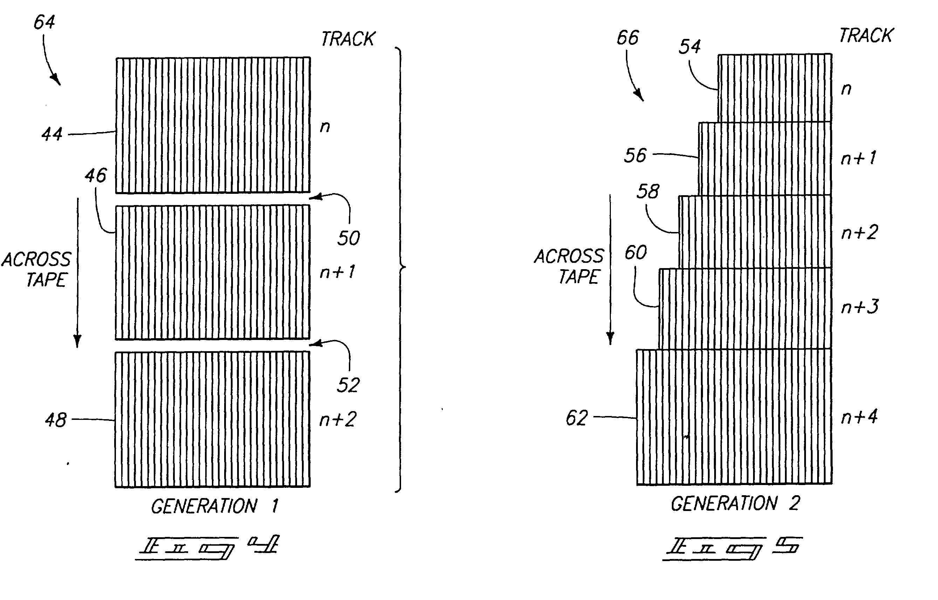

For purposes of disclosing a preferred embodiment, the magnetic media comprises a linear magnetic tape 14 containing a plurality of data tracks that are written across the width of the tape. Groups of adjacent tracks form bands, or bundles. According to one construction, there are four bundles, each adjacent pair being separated by an area, or band, containing servo information. Serpentine recording is implemented within each of the four bundles by a read and write system comprising a read apparatus and a write apparatus in the form of an array of read/write elements, one read/write element accessing several tracks within the serpentine data band. According to some constructions, each band might comprise several passes of a multiple-channel magnetic read/write element of a read/write head recording in serpentine fashion on the magnetic tape. An array of read/write elements form a head 16 (see Fig. 3) that is positioned at specific locations in each band to record a plurality of tracks, with serpentine recording being implemented within each band of tracks. Head 16 is shown in simplified form in Figure 3 as a single read/write element; head 116 of Figure 2 is similarly shown. For example, in one case five tracks can be written across the width of one band, with the read/write head 16 being laterally positioned to read/write data within the five tracks of the band, as shown in Figure 5. Separate read and write gaps are provided in tandem for alignment such that positioning of the array is substantially in alignment in read or write modes. Details of an earlier Generation 1 read/write head 116 and a next Generation 2 read/write head 16 are described below with reference to Figures 2 and 3, respectively.

As shown in Figure 1, a controller 22 cooperates with drive motors 18 to mechanically move the tape in a linear fashion between a pair of spools, one at each end, and in contact with heads 16 (only one being shown in Fig. 1 for purposes of simplification). The tape is stored on the pair of spools. Read/write head 16 comprises a laterally-positionable multiple-track, multiple-gap (or element) head according to one construction. Furthermore, an indexer 20 cooperates with controller 22 to laterally adjust the positioning of read/write heads 16 relative to each set of tracks being written/read on tape 14. Indexer 20 is further used to laterally position head 16 in order to trim each track when implementing serpentine recording on linear tape 14, according to the apparatus and method of this invention. Information is stored on magnetic tape 14 as a sequence of coherent rows of data. The rows of data form a block which is the minimum amount of data written to or read from the magnetic tape with each program statement from computer 12. Block gaps separate each block of data, with no data being stored at the block gaps. Block gaps enable acceleration/deceleration of the tape when starting/stopping at the beginning/end of a block so as to climb to operating speed and stop, respectively.

Linear magnetic tape 14 contains an end of tape marker at each end for identifying the ends of the entire length of tape as the tape is carried for movement along the read/write head 16. Furthermore, a number of blocks of data are identified by a tape file marker as a file, the tape file markers being written to the tape by the tape controller 22. In one form, linear tape 14 can be mounted within a removable tape cartridge which has a removable single reel.

Data flow 26 comprises circuitry operative to transfer data between tape 14 and computer 12. Error detection/correction, formatting, and signal/data processing that occurs within tape drive 10 is implemented via data flow 26. Control and sensing signals are transferred between motors 18 and controller 22 such that programmed control is implemented for controlling data flow 26 and communicating with computer 12. Memory 24 forms a buffer that aids in data transfer between read/write head 16 and data flow 26.

Indexer 20 comprises a servo motor, electronic circuitry, and servo read elements (or sensors) that are present on the magnetic read/write head 16. The servo elements are operative to detect the servo tracks placed between adjacent bands of data tracks and position the read/write heads (or elements) 16 over the adjacent data tracks being "written to"/"read from". The servo-mechanical motor and associated electronic circuitry is driven in operation responsive to the sensed servo signals. The sensed servo signals are processed to generate a servo drive signal for actuating indexer 20 to move read/write heads 16 to follow the servo tracks. Read/write head 16 actually comprises a magnetic head having read and write gaps that cooperate to form a multiple-gap, multiple-track head.

Figures 2 and 3 illustrate the read/write element layout of a read apparatus and a write apparatus for a pair of successive generation read/write head designs for a family of linear magnetic tape storage products. A Generation 1 read/write head 116 is illustrated in Figure 2. A Generation 2 read/write head 16 is illustrated in Figure 3. Figures 4 and 5 illustrate the tape layout for data written onto a linear magnetic tape resulting from the head array layout of Figures 2 and 3, respectively. For purposes of illustrating an exemplary implementation of this invention, all generations utilize a common, 20 µM wide, write element. The linear tape is delivered for lengthwise movement against the read/write head in a travel direction that extends perpendicular to the length of the write element (i.e., the longest dimension of the write element). Hence, read/write head 116 (of Fig. 2) includes a 20 µM wide (in length along the major dimension) write head element 30, and read/write head 16 (of Fig. 3) includes an identical 20 µM wide (in length along the major dimension) write element 42.

Figure 2 illustrates a first generation, original technology read/write element 116 forming part of a read/write head. More particularly, a plurality of read/write elements 116 are formed on a monolithic ceramic wafer construction to form a read/write head having metallized and insulative layers deposited thereon similar to the layering used in semiconductor wafer processing. A base insulative layer 32 forms an insulator upon which metallized strips of material are deposited in the form of read element 28, write element 30, and magnetic shield elements 34 and 36. Elements 28, 30, 32 and 34 are constructed as metallized thin film elements from a conductive nickel iron alloy. Alternatively, a cobalt alloy can be used. The narrow dimension of read element 28 has been exaggerated in order to aid in viewing. Each of elements 28 and 30 are signal coupled with associated read/write circuitry, respectively, by way of metallized vias that extend from elements 28 and 30, into and through base insulative layer 32. A write gap 38 is formed between write head element 30 and a conductive, magnetic shield element 36. Element 36 is also signal coupled by a magnetic coupling with element 30 so as to produce write gap 38 between write element 30 and magnetic element 36. Alternatively, element 36 can be signal coupled with element 30 by way of a conductive via. Read sensor 28 is positioned between magnetic shield elements 34 and 36 where sensor 28 is shielded from interfering magnetic information that is located laterally of the position of sensor 28. Hence, the undesirable detection of past or forthcoming magnetization transition in the tape is reduced by reducing the area from which data is read to directly below the read gap. Otherwise, intersymbol interference from high linear density symbols would be introduced from a lateral source comprising magnetic information adjacent to information present directly beneath element 28 during reading of data from a tape. Read element 28 also cooperates with shield elements 34 and 36 to form a read gap (not numbered).

Figure 3 illustrates a later, future generation new technology read/write head 16. More particularly, head 16 is formed as a monolithic ceramic element wafer construction having metallized and insulative layers deposited thereon similar to head 116 of Figure 2. A base insulative layer 32 forms an insulator upon which metallized strips of material are deposited in the form of read sensor 40, write element 42, and magnetic shield elements 34 and 36. Sensors 28 and 40 magnetically couple with adjacent shield elements 34 and 36 to form a dual-gap read element. Tape elements 40, 42, 34 and 36 are constructed as metallized, magnetic thin film elements from a conductive nickel iron alloy. Alternatively, a cobalt alloy can be used. The narrow dimension of read sensor 40 has been exaggerated in order to aid in viewing. Each of elements 40 and 42 are signal coupled with associated read/write circuitry, respectively, by way of metallized vias that extend from elements 40 and 42, into and through base insulative layer 32. A write gap 38 is formed between write element 42 and a magnetic shield element 36 via magnetic coupling between write element 32 and magnetic shield element 36. Shield element 36 is magnetically coupled with a circuit in association with write element 42. Read sensor 40 is positioned between magnetic shield elements 34 and 36 where sensor 40 is shielded from interfering magnetic information that is located laterally of the position of sensor 40. Read sensor 40 also cooperates with shield elements 34 and 36 to form a dual-gap read gap (not numbered).

In the Generation 1 product, read sensor 28 of read/write head 116 is sized to be 10 µM wide (in length, extending transverse to the tape travel direction), whereas in the Generation 2 product, read sensor 40 is sized to be 5 µM wide (in length, extending transverse to the tape travel direction). Read sensor 28 is located relative to write element 30 in the direction of tape travel so as to be commonly centered on the tape, as shown in Figure 2. In contrast, read sensor 40 is located relative to write element 42 so as to be centered with a top half portion of write element 42, as shown in Figure 3.

In operation, the Generation 1 write element 30 is positioned between adjacent tracks at a track-to-track spacing of 20 µm, producing the side-by-side track spacing depicted in Figure 4. In contrast, the Generation 2 write head element 42 is positioned between adjacent tracks at a track-to-track spacing of 10 µM wherein track trimming is used via serpentine (spiral) recording on the linear tape to produce the side-by-side track spacing depicted in Figure 5.

As shown in Figure 4, a Generation 1 read/write element 116 is moved laterally via an indexer (such as indexer 20 of Fig. 1) to produce a track-to-track spacing of approximately 20 µm. As shown in Figure 4, small gaps 50 and 52 have been provided between adjacent pairs of tracks 44, 46 and 46, 48, respectively. However, gaps 50 and 52 are not necessary. For the case where gaps 50 and 52 have a nominal width, the indexer moves head 116 nominally greater than 20 µm, which is nominally greater than a whole width of a written track laid out by write element 30.

A Generation 2 read/write head also writes a 20 µm wide track 54 (n). However, the read/write head 16 is moved by indexer 20 (of Fig. 1) 10 µm in a lateral or sideways direction (relative to the tape travel direction) in order to record track 56 (n + 1). Track 56 (n + 1) overlaps track 54, trimming track 54 as track 56 is written. Successive adjacent data tracks are similarly subsequently written. Such trimming provides for backwards write and read capabilities between Generation 1 and Generation 2 tapes and heads. Hence, a Generation 2 read/write element 16 (of Fig. 3) will write track 54 (n) so as to have a 20 µm width. The read/write head is then moved 10 µm across the linear tape during serpentine recording in order to record the next track 56 (n + 1). New track 56 (n + 1) is also 20 µm wide. However, track 54 (n) is now trimmed to 10 µm in width. Successive tracks are similarly written, with previous tracks being similarly trimmed. The last track written within a band will not be trimmed, leaving a 20 µm wide last track, with all previously written tracks being trimmed to a 10 µm width.

According to one construction for a Generation 2 head 16, read sensor 40 is constructed and arranged to read a portion of a track written by write element 42 after the written track has been trimmed. It is to be understood that write element 42 is constructed and arranged to read a trimmed track having a track width reduced in width over the originally written track as a result of track trimming. In many applications, read sensor 40 will be constructed and arranged relative to write element 42 so as to be able to read a trimmed track having a width in the range of 25%-75% of the width of the originally written track. However, other constructions and arrangements for read sensor 40 relative to write element 42 are possible for enabling reading of a trimmed track.

Such successive recording of tracks within a band of tracks being written results in a tiling, or shingling of adjacent tracks, wherein a successive track overwrites an adjacent, previously written track. For purposes of illustration, the track trimming has been shown via an implementation wherein tracks are laid down in one direction across a linear tape, perpendicular to the travel direction of the linear tape, from a first edge of a band to a second edge. However, it is understood that serpentine recording within a band of tracks can entail writing a center track first, then trimming the center track along one or both outer edges, followed by laying adjacent tracks on either side of the first track. Adjacent, subsequent tracks on each side of the first track are to be trimmed via overwriting such that the last track on each side will remain full-width, or un-trimmed. Other optional serpentine tracks patterns can be implemented according to the apparatus and method of this invention, within a band of tracks or within an entire width of a linear tape being written.

It is to be understood that a read apparatus can be formed by a single read head. Similarly, a write apparatus can be formed by a single write head. Furthermore, the read and write apparatus can be configured to read and write on various storage media, including magnetic storage media, optical, electric field modification media including ferro electric materials, heat-generated media systems, direct electron injection writing media, and various other read and write media.

In compliance with the statute, the invention has been described in language more or less specific as to structural and methodical features. It is to be understood, however, that the invention is not limited to the specific features shown and described, since the means herein disclosed comprise preferred forms of putting the invention into effect. The invention is, therefore, claimed in any of its forms or modifications within the proper scope of the appended claims appropriately interpreted in accordance with the doctrine of equivalents.

## Claims

1. An improved read and write head (16) system having multiple generation removable storage medium (14) capability, comprising:
a write apparatus (42);
a read apparatus (40);
an indexer (20) operative to position the read and write apparatus (40, 42) and configurable to position the write apparatus (42) during writing of a track (56) so as to at least partially overlap an adjacent previously written track (54).

2. The read and write head (16) system of claim 1 wherein the read apparatus (40) comprises a read head (40) having a read element (40) forming a read gap, and the write apparatus (42) comprises a write element (42) forming a write gap (38), the read gap being sized fractionally with respect to the write gap (38).

3. The read and write head (16) system of claim 1 wherein the read apparatus (40) is arranged to extend in a direction laterally of a travel direction of the storage medium (14) and is sized approximately one-half the size of the write apparatus (42).

4. The read and write head (16) system of claim 1 wherein the read apparatus (40) is a fractional size of the write apparatus (42).

5. The improved read and write head (16) system of claim 1 wherein the write apparatus (42) comprises a write element (42).

6. The read and write head (16) system of claim 1 wherein the read apparatus (40) comprises a read element (40) sized smaller than the write apparatus (42).

7. A method for writing a plurality of data tracks (54, 56) to be read on a magnetic linearly movable storage medium (14), comprising the steps of:
writing a first track (54) of data on the magnetic storage medium (14); and
writing a second, subsequent track (56) of data on the magnetic storage medium (14) adjacent to the first track (54) and at least partially overlapping the adjacent track (54) so as to trim the first track (54).

8. The method of claim 7 wherein following the step of writing the second track (56), further comprising the step of reading the trimmed first track (54) with a reader (40) sized and positioned to read the trimmed first track (54).

9. The method of claim 7 wherein following the step of writing the first track (54) and preceding the step of writing the second track (56), further comprising the step of laterally positioning a writer (42) less than a full width of a corresponding write gap (38) laterally of the linearly movable storage medium (14).

10. The method of claim 7 wherein the step of writing a track comprises track trimming during serpentine recording on a linear magnetic tape (14).
